# EUROPÄISCHE PATENTSCHRIFT

(11) **EP 3 168 542 B1**
(45) Veröffentlichungstag und Bekanntmachung des Hinweises auf die Patenterteilung: **22.04.2020**
(21) Anmeldenummer: 16197957.0
(22) Anmeldetag: 09.11.2016
(51) Int. Cl.: F24F 5/00, F24D 3/14

(54) **FLÄCHENTEMPERIERSYSTEM, WÄRMETAUSCHERANORDNUNG, VERFAHREN SOWIE MONTAGEVERFAHREN**
AREA TEMPERATURE CONTROL SYSTEM, HEAT EXCHANGER ASSEMBLY, METHOD AND METHOD OF INSTALLATION
SYSTÈME DESTINÉ À TEMPÉRER DES SURFACES, SYSTÈME D'ÉCHANGEUR DE CHALEUR, PROCÉDÉ ET PROCÉDÉ DE MONTAGE

(30) Priorität: 12.11.2015 DE 202015106131 U
(43) Veröffentlichungstag der Anmeldung: 17.05.2017
(73) Patentinhaber: Uponor Innovation AB, 73061 Virsbo (SE)
(72) Erfinder: Lipinski, Johann, 22926 Ahrensburg (DE); Llorente, Raul, 96047 Bamberg (DE)
(74) Vertreter: Epping - Hermann - Fischer

(56) Entgegenhaltungen:
- JP-A- 2008 122 014
- JP-A- 2009 052 778
- US-B1- 6 533 185

## Beschreibung

Die vorliegende Erfindung betrifft ein Flächentemperiersystem zur Kühlung oder Heizung von Decken, Wänden oder Böden eines Gebäudes. Die Erfindung betrifft des Weiteren eine Wärmetauscheranordnung mit einem solchen Flächentemperiersystem.

Flächentemperiersysteme sind aus dem Stand der Technik vielfach bekannt. Im Gegensatz zu konventionellen Systemen erlauben Flächentemperiersysteme Raum- und Bauteilflächen wie Böden, Wände und Decken sowohl zum Heizen als auch zum Kühlen zu nutzen. Durch solche Systeme ist es beispielsweise möglich, im Winter einen Raum zu Heizen und im Sommer zu kühlen, wobei im Wesentlichen dieselbe Technologie verwendet wird. Die Flächentemperiersysteme nutzen für die Wärmeübertragung typischerweise mit einem Medium durchströmte Rohrleitungen. Solche Flächentemperiersysteme erlauben eine effiziente Nutzung von Räumen, weil das gesamte System in Böden, Wänden oder Decken integriert ist. Weiterhin ermöglichen die Flächentemperiersysteme nicht nur den Einbau in Neubauten, sondern auch den nachträglichen Einbau in Altbauten.

Aus der JP 2008 122014 A ist eine Bodenheizungsmatte bekannt, die rechteckige Substrate aufweist, in die Nuten zur Aufnahme von Rohren an einer Oberseite eingebracht sind.

Eine Aufgabe der vorliegenden Erfindung ist es, ein Konzept für Flächentemperiersystem anzugeben, welches zu einer flexiblen Handhabbarkeit und einer einfachen Montage beiträgt.

Es wird ein Flächentemperiersystem zur Kühlung oder Heizung von Decken, Wänden oder Böden eines Gebäudes offenbart. Das Flächentemperiersystem weist eine Verlegeplatte auf, in die zumindest ein zu einer Oberseite der Verlegeplatte offener Rohrführungskanal eingebracht ist. Weiter sind zwei Wärmeleitfolien vorgesehen, die derart auf die Oberseite der Verlegeplatte aufgebracht sind, dass sich die zwei Wärmeleitfolien zumindest entlang eines Abschnitts des Rohrführungskanals überlappen, so dass beim Einbringen eines Rohres in den Rohrführungskanal die Wärmeleitfolien entlang des Abschnitts in den Rohrführungskanal eingedrückt werden und diesen zumindest teilweise auskleiden.

Ein derartiges Flächentemperiersystem ist sehr flexibel und handhabbar und besonders einfach zu montieren. Insbesondere müssen lediglich zwei Wärmeleitfolien so auf die Verlegeplatte aufkaschiert werden, dass sich diese zumindest entlang des Abschnitts des Rohrführungskanals überlappen. Mit anderen Worten entsteht ein Überlappungsbereich in einem Bereich des nach oben offenen Rohrführungskanals. Insbesondere ist der Überlappungsbereich über der Öffnung des Rohrführungskanals. Mit Überlappungsbereich ist beispielsweise der Bereich gemeint, in welchem zwei Folien übereinander liegen. Ein Überlappungsgrad, etwa eine Ausdehnung oder Dimension des Überlappungsbereichs, ist so gewählt, dass beim Einbringen eines Rohres in den Rohrführungskanal die Wärmeleitfolien in dem Überlappungsbereich in den Rohrführungskanal miteingedrückt werden.

Durch das Eindrücken in den Rohrführungskanal kann je nach gewähltem Überlappungsgrad ein großflächiger Kontakt zwischen dem eingedrückten Rohr und der Wärmeleitfolie hergestellt werden. Mit anderen Worten ist das Rohr im eingebrachten Zustand in einem großen Bereich von den beiden Wärmeleitfolien umgeben. Dadurch wird zu einer effektiven Wärmeübertragung von dem Rohr auf die Wärmeleitfolie beigetragen, so dass sich die von dem Rohr ausgestrahlte Wärme beziehungsweise Kälte großflächig über die Wärmeleitfolien der Verlegeplatte verteilen. Es wurde erkannt, dass sich ein derartiges Flächentemperiersystem besonders einfach herstellen lässt. Es müssen lediglich zwei Wärmeleitfolien bereitgestellt werden, die überlappend auf die Verlegeplatte aufgebracht werden. Beim Aufbringen der beiden Wärmeleitfolien können Toleranzen bei der Aufkaschierung kompensiert werden. Mit anderen Worten muss das Aufbringen der beiden Wärmeleitfolien nicht mit höchster Präzision geschehen.

Beim Einbringen des Rohres werden Teile der Wärmeleitfolien in den Rohrführungskanal eingedrückt beziehungsweise eingepresst. Das Einbringen des Rohres kann auf einfache Art und Weise erfolgen. Es ist im Wesentlichen kein besonderer Kraftaufwand zum Eindrücken der beiden Wärmeleitfolien nötig, da diese im Überlappungsbereich nicht miteinander verbunden sind. Somit muss beispielsweise keine Kraft zum Durchtrennen einer einzelnen Folie aufgebracht werden, die den Rohrführungskanal vollständig überdeckt. Dies gilt auch im Falle einer perforierten Folie, die einen Rohrführungskanal vollständig überdeckt, da auch hier Kräfte notwendig sind, um die Folie entlang der Perforation einzureißen. Weiterhin wird dazu beigetragen, dass stets eine gleichmäßige, vorbestimmte Auskleidung des Rohrführungskanals erreicht wird. Im Falle eines Einreißens der Folie wäre diese nicht oder nur bedingt vorhersehbar.

Ein weiterer Vorteil besteht darin, dass mittels des Überlappungsgrads eingestellt werden kann, welche Bereiche des Rohrführungskanals ausgekleidet werden sollen. Dies ist im Falle der Verwendung nur einer einzelnen Folie zum Überdecken des gesamten Rohrführungskanals, sie es mit oder ohne Perforation, nicht möglich, da nur der Teil der Folie zum Auskleiden zu Verfügung steht, der den Rohrführungskanal überdeckt. Nachteilig bei einer einzelnen Folie würde oftmals nur ein geringflächiger oder sogar lediglich linienförmiger Kontakt mit dem Rohr erreicht, was einen im Vergleich zum beschrieben System verminderten Wirkungsgrad zum Heizen bzw. Kühlen zur Folge hat.

Es sei an dieser Stelle angemerkt, dass in verschiedenen Ausgestaltungen mehrere Rohrführungskanäle und dementsprechend mehrere Wärmeleitfolien vorgesehen sind, von denen sich jeweils zwei zumindest abschnittsweise entlang eines der Rohrführungskanäle überlappen. Derartige Ausgestaltungen weichen nicht vom beschriebenen Prinzip des Flächentemperiersystems ab.

Gemäß einer weiteren Ausgestaltung überlappen sich die Wärmeleitfolien derart, dass nach dem Eindrücken der Wärmeleitfolien in den Rohrführungskanal ein Bereich des Rohrführungskanals frei von Wärmeleitfolien bleibt. Der Bereich bedeutet beispielsweise einen Teil oder Abschnitt einer Innenwandung beziehungsweise Innenfläche des Rohrführungskanals. In diesem Bereich des Rohrführungskanals ist zwischen der Innenfläche der Verlegeplatte und dem Rohr keine Folie angeordnet.

In einer Ausgestaltung weist der Rohrführungskanal einen Umfang auf und der Bereich ist um eine Mitte des Umfangs angeordnet.

Durch einen freien Bereich des Rohrführungskanals wird beispielsweise erreicht, dass ein von der Oberseite der Verlegeplatte entfernter Bereich eines Umfangs des Rohrführungskanals nicht mit einer Wärmeleitfolie überzogen ist. Mit anderen Worten wird dadurch ermöglicht, einen Bodenbereich des Rohrführungskanals von Wärmeleitfolien freizuhalten. Dies trägt dazu bei, dass die von dem Rohr abgegebene Wärme oder Kälte besonders effektiv in den Wärmeleitfolien über die Oberseite der Verlegeplatte verteilt wird. Über den Boden des Rohrführungskanals findet praktisch kein oder nur ein geringer Wärmeaustausch ins Innere der Verlegeplatte statt. Dies trägt zu einem effizienten Flächentemperiersystem bei. Insbesondere verhält sich ein solches Flächentemperiersystem im Vergleich zu Systemen mit einem vollausgekleideten Rohrführungskanal nicht oder nur unwesentlich schlechter hinsichtlich eines Wirkungsgrades beim Wärmeaustausch zum Heizen oder Kühlen von Räumen. Solch vollausgekleideter Rohrführungskanal ist jedoch typischerweise mit einem vorgestanzten und/der vorgeprägten Blech anstelle der Wärmeleitfolie versehen, was deutliche Kostennachteile gegenüber der beschriebenen Lösung hat.

Gemäß einer Ausgestaltung weist jede Wärmeleitfolie einen Überlappungsabschnitt auf, der durch einen Rand der Wärmeleitfolie begrenzt ist, wobei beide Überlappungsabschnitte beim Einbringen des Rohres in den Rohrführungskanal eingedrückt werden. Der Rohrführungskanal ist zur Oberseite hin durch zwei Kanten der Verlegeplatte definiert. Beim Eindrücken der Wärmeleitfolie in den Rohrführungskanal wird je eine Wärmeleitfolie um die eine Kante und die andere Wärmeleitfolie um die andere Kante nach innen gebogen und der inneren Formgebung des Kanals im Wesentlichen angepasst. Beim Eindrücken wird jeder Überlappungsabschnitt zu jeweils einer Seite des Rohrführungskanals hin eingedrückt. Somit kann beispielsweise ein zwischen den Rändern der Überlappungsabschnitte definierter Bereich des Rohrführungskanals frei von Wärmeleitfolien bleiben.

Gemäß einer Ausgestaltung überlappen sich die Überlappungsabschnitte beim Aufbringen auf die Verlegeplatte derart, dass jeder Überlappungsabschnitt zumindest ein Drittel eines Umfangs eine Rohrführungskanals nach dem Einbringen des Rohres auskleidet. Dadurch wird insbesondere ein besonders effektiver Wärmeaustausch zwischen einem eingebrachten Rohr und den beiden Wärmeleitfolien gewährleistet, wobei insbesondere wie oben beschrieben ein zwischen den beiden Rändern der Wärmeleitfolien freibleibender Bereich des Rohrführungskanals nicht mit Wärmeleitfolien überzogen ist.

Gemäß einer Ausgestaltung ist der Rohrführungskanal als halbzylinderförmige Ausnehmung in der Verlegeplatte ausgebildet. Dadurch können die Folien besonders einfach und schonend in den Rohrführungskanal eingedrückt werden. Insbesondere können scharfe Kanten oder Konturübergänge vermieden werden, wodurch die Wärmeleitfolien Schaden nehmen könnten.

Gemäß einer weiteren Ausgestaltung verläuft der Rohrführungskanal geradlinig. Dadurch wird eine besonders einfache Herstellung des Flächentemperiersystems gewährleistet.

Gemäß einer Ausgestaltung sind die Wärmeleitfolien als Streifen ausgebildet. Dadurch wird zu einer besonders einfachen Herstellung des Flächentemperiersystems beigetragen. Insbesondere müssen zusammen mit geradlinig verlaufenden Rohrführungskanälen die Wärmeleitfolien rechtwinklig auf die Verlegeplatte aufgebracht werden.

Gemäß einer weiteren Ausgestaltung ist die Verlegeplatte als Dämmstoffplatte ausgebildet. Die Dämmstoffplatte dient dem Isolieren von Wärme oder Kälte. Für die Dämmstoffplatte eignen sich insbesondere EPS, PU, Holzwolle oder andere Dämmstoffmaterialien.

Gemäß einer weiteren Ausgestaltung sind die Wärmeleitfolien aus einem Aluminiumwerkstoff oder einem Graphitwerkstoff hergestellt.

Es wird weiterhin eine Wärmetauscheranordnung offenbart, welche ein Flächentemperiersystem gemäß einer der oben beschriebenen Ausgestaltungen aufweist. Die Wärmetauscheranordnung weist weiterhin ein Rohr auf, durch welches ein Medium zum Kühlen und/oder Heizen strömbar ist. Das Flächentemperiersystem weist eine Verlegeplatte auf, in die zumindest ein zu einer Oberseite der Verlegeplatte offener Rohrführungskanal eingebracht ist. Weiterhin sind zwei Wärmeleitfolien vorgesehen, die derart auf die Oberseite der Verlegeplatte aufgebracht sind, dass sich die zwei Wärmeleitfolien entlang des Rohrführungskanals überlappen. Das Rohr ist derart in den Rohrführungskanal eingebracht, dass die Wärmleitfolien zumindest teilweise in den Rohrführungskanal eingedrückt sind und diesen zumindest teilweise auskleiden.

Die Wärmetauscheranordnung ermöglicht im Wesentlichen die vorgenannten Vorteile und Funktionen.

Des Weiteren wird ein Verfahren zum Herstellen eines solchen Flächentemperiersystems offenbart. Das Verfahren umfasst die Schritte:
- Bereitstellen einer Verlegeplatte;
- Einbringen zumindest eines zu einer Oberseite der Verlegeplatte offenen Rohrführungskanals; und
- Aufbringen zweier Wärmeleitfolien auf die Oberseite der Verlegeplatte derart, dass sich diese entlang des Rohrführungskanals zumindest in einem Abschnitt überlappen.

Weiterhin wird ein Montageverfahren zum Herstellen einer Wärmetauscheranordnung offenbart. Das Montageverfahren umfasst die Schritte:
- Bereitstellen eines Flächentemperiersystems gemäß einer beschriebenen Ausgestaltung;
- Einbringen eines Rohres in den Rohrführungskanal derart, dass die Wärmleitfolien zumindest teilweise in den Rohrführungskanal eingedrückt sind und diesen zumindest teilweise auskleiden.

Das Verfahren zur Herstellung eines Flächentemperiersystems sowie das Montageverfahren ermöglichen im Wesentlichen die vorgenannten Vorteile und Funktionen.

Weitere Vorteile und Funktionen sind in den Unteransprüchen und der nachfolgenden, ausführlichen Beschreibung von Ausführungsbeispielen beschrieben.

Die Ausführungsbeispiele werden unter Zuhilfenahme der angehängten Figuren nachfolgend beschrieben.

In den Figuren zeigen:
- Figur 1: eine schematische Querschnittsansicht eines Flächentemperiersystems,
- Figur 2: eine schematische Querschnittsansicht einer Wärmetauscheranordnung mit dem Flächentemperiersystem, und
- Figur 3: eine weitere schematische Querschnittsansicht des Flächentemperiersystems.

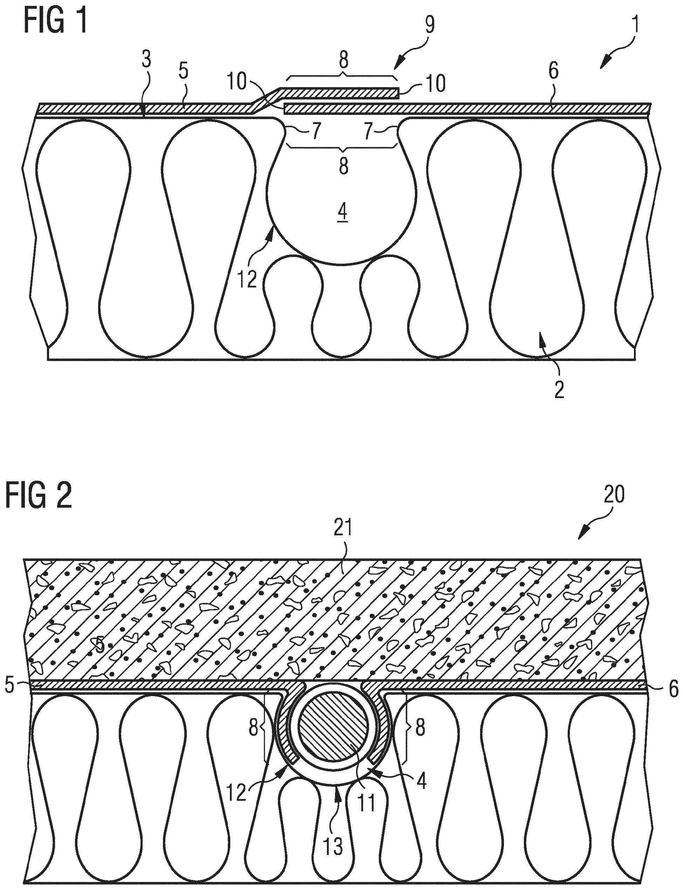

Figur 1 zeigt eine schematische Querschnittsansicht eines Flächentemperiersystems 1. Das Flächentemperiersystem 1 weist eine Verlegeplatte 2 aus Schaumkunststoff auf. Die Verlegeplatte 2 stellt eine Dämmstoffplatte dar. Bei dem Schaumkunststoff handelt es sich im Ausführungsbeispiel um EPS (expandiertes Polystyrol). Alternativ können auch andere Werkstoffe wie beispielsweise Mineral- oder Holzfaserplatten verwendet werden. Die Verlegeplatte 2 weist eine Oberseite 3 auf. In die Verlegeplatte 2 ist ein Rohrführungskanal 4 eingebracht, der nach oben hin zur Oberseite 3 offen ist. Der Rohrführungskanal 4 ist zylinderförmig ausgestaltet und dient der Aufnahme eines Rohres, durch welches ein Medium wie Wasser um Kühlen und/oder Heizen durchströmt wird. Auf die Oberseite 3 sind zwei Wärmeleitfolien 5 und 6 aufkaschiert. Die Wärmeleitfolien 5 und 6 sind aus einem Aluminiumwerkstoff hergestellt. Alternativ können auch andere wärmeleitende Werkstoffe verwendet werden wie beispielsweise Grafit. Der Rohrführungskanal 4 ist an der Oberseite 3 durch zwei gegenüberliegende Kanten 7 begrenzt. Die Kanten 7 geben einen Verlauf des Rohrführungskanals 4 vor (nicht dargestellt).

Die beiden Wärmeleitfolien 5 und 6 sind jeweils so auf die Verlegeplatte 2 aufgebracht, dass diese sowohl sich selbst als auch den Rohrführungskanal 4 teilweise überlappen. Jede der Wärmeleitfolien 5 und 6 weist einen Überlappungsabschnitt 8 auf. Die Überlappungsabschnitte 8 der beiden Wärmeleitfolien 5 und 6 sind jeweils von einem Rand 10 begrenzt. Der Überlappungsabschnitt 8 einer Wärmeleitfolie 5, 6 entspricht dem Abschnitt, der sich von einer Kante 7 bis zu dem Rand 10 der entsprechenden Wärmeleitfolie 5, 6 erstreckt. Im Ausführungsbeispiel entspricht ein Überlappungsabschnitt 8 im Wesentlichen dem Abstand der beiden Kanten 7. Die beiden Wärmeleitfolien 5, 6 bilden somit einen Überlappungsbereich 9 entlang des Rohrführungskanals 4 aus. Der Überlappungsbereich 9 der beiden Wärmeleitfolien 5 und 6 verläuft im Ausführungsbeispiel entlang des Rohrführungskanales 4, also in einer Richtung normal zu Bildebene der Figuren 1 bis 3 (nicht dargestellt). Im Ausführungsbeispiel überlappen sich die beiden Wärmeleitfolien 5 und 6 entlang des gesamten in die Verlegeplatte 2 eingebrachten Rohrführungskanals 4. In alternativen Ausgestaltungen ist es auch denkbar, dass sich die Wärmeleitfolien 5 und 6 nur abschnittsweise entlang eines Rohrführungskanals überlappen.

In das Flächentemperiersystem 1 wird zum Heizen und Kühlen ein Rohr eingebracht. Dies ist in Figur 2 dargestellt, welche eine Wärmetauscheranordnung mit dem in Figur 1 dargestellten Flächentemperiersystem 1 darstellt.

Figur 2 zeigt ein Wärmetauscheranordnung 20, welches ein Flächentemperiersystems 1 aufweist. Das Flächentemperiersystem 1 ist zusätzlich mit einem Estrich 21 versehen, der auf die Wärmeleitfolien 5 und 6 aufgebracht ist. Der Estrich 21 ist beispielsweise Zementesstrich (nass) oder Gipsestrich (trocken). Alternativ kann anstelle des Estrichs 21 auch anderes Material aufgebracht sein. Beispielsweise ist ein Parkett oder Fliesen auf die Verlegeplatte 2 aufgebracht, wobei zusätzlich eine Entkupplungsmatte notwendig sein kann. Die Wärmetauscheranordnung 20 weist ein Rohr 11 auf, welches in den Rohrführungskanal 4 eingebracht ist.

Das Rohr 4 wird dabei in den Rohrführungskanal 4 gemäß der in Figur 1 gezeigten Form im Überlappungsbereich 9 eingedrückt. Bei Eindrücken beziehungsweise Einpressen wird der Überlappungsbereich 9 bzw. werden die Überlappungsabschnitte 8 der Wärmeleitfolien 5 und 6 mit in den Rohrführungskanal 4 eingedrückt und kleiden diesen entlang eines Umfangs 12 des Rohrführungskanals 4 aus. Dabei bleibt ein Bereich 13 am Boden des Rohrführungskanals 4 frei von der Wärmeleitfolien. Mit anderen Worten ist ein unterer Bereich des Rohrführungskanals 4, der am weitesten von der Oberseite 3 der Verlegeplatte 2 entfernt ist, frei von den Wärmeleitfolien 5, 6. Beim Eindrücken der Wärmeleitfolien 5, 6 werden diese über jeweils entlang einer Kante 7 des Rohrführungskanals 4 nach innen gebogen.

Je nach Überlappungsgrad, das heißt Ausgestaltung der Überlappungsabschnitte 8 und Anordnung derer übereinander, kann gesteuert werden, welche Bereiche des Rohrführungskanals 4 über dessen Umfang 12 ausgekleidet werden. Somit ist gezielt einstellbar, welche Innenflächen oder Innwandbereiche des Rohrführungskanals 4 mit den Wärmeleitfolien 5, 6 überzogen sind. Dabei ist bevorzugt der Bereich 13 frei, so dass darüber eine Dämmung zur Verlegeplatte 2 erreicht ist.

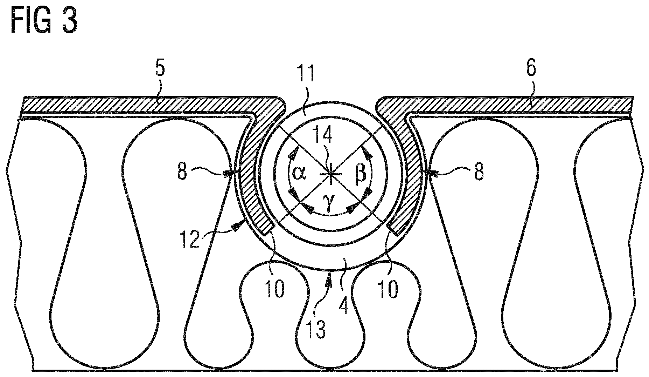

Anhand von Figur 3 ist detailliert erläutert, welche Teile des Rohrführungskanals 4 von den Wärmeleitfolien 5 und 6 ausgekleidet sind. Aus Gründen der Übersichtlichkeit ist das Flächentemperiersystem 1 ohne Darstellung des Estrichs 21 gezeigt.

Wie bereits ausgeführt weist der Rohrführungskanal 4 im Wesentlichen einen kreisförmigen Umfang 12 auf. Bezogen auf einen Mittelpunkt 14 des Rohrführungskanals 4 kleiden die Wärmeleitfolien 5 und 6 jeweils einen Kreisbogenabschnitt des Rohrführungskanals 4 aus, der mit dem Winkel α beziehungsweise Winkel β beschrieben ist. Der freibleibende Bereich 13 des Umfangs 12 ist über den Winkel γ beschrieben und ist von den Rändern 10 der Wärmeleitfolien 5, 6 begrenzt. Im Ausführungsbeispiel sind die Überlappungsabschnitte 8 derart gewählt, dass diese zumindest zusammengenommen zwei Drittel des Umfangs 12 des Rohrführungskanals 4 auskleiden. Würde man anstelle zweier Wärmeleitfolien, die sich überlappen nur eine Wärmeleitfolie vorsehen, die den Rohrführungskanal 4 an der Oberseite 3 überdeckt, so würde im Vergleich zum Ausführungsbeispiel nur die Hälfte des Rohrführungskanals 4 mit Wärmeleitfolie aufgrund der geometrischen Verhältnisse ausgekleidet und dadurch die Wärmeübertragung reduziert werden.

Das beschriebene Flächentemperiersystem 1 beziehungsweise die Wärmetauscheranordnung 20 eignen sich besonders für Nass und/oder Trockenbodeninstallationen, im Besonderen für Rohrinstallationen. Wie bereits eingangs erwähnt, können mehrerer Rohrführungskanäle 4 und Wärmeleitfolien 5, 6 einer Verlegeplatte 2 vorgesehen sein, die entsprechend dem beschriebenen Prinzip die Rohrführungskanäle überlappen und mittels den Rohren eingedrückt werden.

In nicht dargestellten Ausführungsbeispielen verlaufen der oder die Rohrführungskanäle im Wesentlichen geradlinig und parallel zueinander. Dabei können nebeneinander angeordnete Rohrführungskanäle an Enden über einen Bogenabschnitt verbunden sein. In einem solchen Fall können die Wärmeleitfolien streifenartig ausgebildet sein, um die geraden Abschnitte der Rohrführungskanäle zu überlappen. Dadurch sind die Wärmeleitfolien einfach herstellbar und können einfach, etwa ohne großen Montage- und Justageaufwand, auf die Verlegeplatte aufgebracht werden. Die Streifen müssen lediglich parallel zueinander auf die Verlegeplatte aufkaschiert werden.

Es sei an dieser Stelle angemerkt, dass anstelle des exemplarischen Estrichs 21 gemäß Figur 2 auch ein anderer Werkstoff oder Material auf das Flächentemperiersystem 1 aufgebracht werden kann.

### Bezugszeichenliste

- 1: Flächentemperiersystem
- 2: Verlegeplatte
- 3: Oberseite
- 4: Rohrführungskanal
- 5, 6: Wärmeleitfolie
- 7: Rand
- 8: Überlappungsabschnitt
- 9: Überlappungsbereich
- 10: Rand
- 11: Rohr
- 12: Umfang
- 13: Bereich
- 14: Mittelpunkt
- α, β, γ: Winkel
- 20: Wärmetauscheranordnung
- 21: Estrich

## Patentansprüche

1. Flächentemperiersystem (1) zur Kühlung oder Heizung von Decken, Wänden oder Böden eines Gebäudes, aufweisend
- eine Verlegeplatte (2), in die zumindest ein zu einer Oberseite (3) der Verlegeplatte (2) offener Rohrführungskanal (4) eingebracht ist; und
- zwei Wärmeleitfolien (5, 6), **dadurch gekennzeichnet dass** die zwei Wärmeleitfolien (5, 6) derart auf die Oberseite (3) der Verlegeplatte (4) aufgebracht sind, dass sich die zwei Wärmeleitfolien (5, 6) zumindest entlang eines Abschnitts des Rohrführungskanals (4) überlappen, so dass beim späteren Einbringen eines Rohres (11) in den Rohrführungskanal (4) die Wärmleitfolien (5, 6) entlang des Abschnitts in den Rohrführungskanal (4) eingedrückt werden und diesen zumindest teilweise auskleiden.

2. Flächentemperiersystem (1) nach Anspruch 1, wobei sich die Wärmeleitfolien (5, 6) derart überlappen, dass nach dem Eindrücken der Wärmeleitfolien (5, 6) in den Rohrführungskanal (4) ein Bereich (13) des Rohrführungskanals (4) frei von Wärmeleitfolien (5, 6) bleibt.

3. Flächentemperiersystem (1) nach Anspruch 2, wobei der Rohrführungskanal (4) einen Umfang (12) aufweist und der Bereich (13) um eine Mitte des Umfangs (12) angeordnet ist.

4. Flächentemperiersystem (1) nach einem der vorhergehenden Ansprüche, wobei jede Wärmleitfolie (5, 6) einen Überlappungsabschnitt (8) aufweist, der durch einen Rand (10) der Wärmeleitfolie (5, 6) begrenzt ist, wobei beide Überlappungsabschnitte (8) beim Einbringen des Rohres (11) in den Rohrführungskanal (4) eingedrückt werden.

5. Flächentemperiersystem (1) nach Anspruch 4, wobei sich die Überlappungsabschnitte (8) derart vorbestimmt überlappen, dass jeder Überlappungsabschnitt (8) zumindest ein Drittel eines Umfangs (12) des Rohrführungskanals (4) auskleidet.

6. Flächentemperiersystem (1) nach einem der vorhergehenden Ansprüche, wobei der Rohrführungskanal (4) als halbzylinderförmige Ausnehmung in der Verlegeplatte (2) ausgebildet ist.

7. Flächentemperiersystem (1) nach einem der vorhergehenden Ansprüche, wobei der Rohrführungskanal (4) geradlinig verläuft.

8. Flächentemperiersystem (1) nach einem der vorhergehenden Ansprüche, wobei die Wärmeleitfolien (5, 6) als Streifen ausgebildet sind.

9. Flächentemperiersystem (1) nach einem der vorhergehenden Ansprüche, wobei die Verlegeplatte (2) als Dämmstoffplatte ausgebildet ist und die Wärmeleitfolien (5, 6) aus einem Aluminiumwerkstoff oder einem Graphitwerkstoff hergestellt sind.

10. Verfahren zum Herstellen eines Flächentemperiersystems (1) gemäß einem der Ansprüche 1 bis 9, umfassen die Schritte:
- Bereitstellen einer Verlegeplatte (2);
- Einbringen zumindest eines zu einer Oberseite (3) der Verlegeplatte (2) offenen Rohrführungskanals (4); und
- Aufbringen zweier Wärmeleitfolien (5,6) auf die Oberseite (3) der Verlegeplatte (2) derart, dass sich diese Wärmeleitfolien (5,6) entlang des Rohrführungskanals (4) zumindest in einem Abschnitt überlappen.

11. Montageverfahren zum Herstellen einer Wärmetauscheranordnung (2), umfassend die Schritte:
- Bereitstellen eines Flächentemperiersystems (1) gemäß einem der Ansprüche 1 bis 9;
- Einbringen eines Rohres (11) in den Rohrführungskanal (4) derart, dass die Wärmleitfolien (5,6) zumindest teilweise in den Rohrführungskanal (4) eingedrückt sind und diesen zumindest teilweise auskleiden.

## Claims

1. An area temperature control system (1) for cooling or heating ceilings, walls or floors of a building, comprising
- an installation plate (2) in which at least one tube guiding channel (4), open towards an upper side (3) of the installation plate (2), is incorporated; and
- two heat conducting foils (5, 6), **characterized in that** the two heat conducting foils (5, 6) are applied to the upper side (3) of the installation plate (2) in such a way that the two heat conducting foils (5, 6) overlap at least along a portion of the tube guiding channel (4), so that, when a tube (11) is later inserted into the tube guiding channel (4), the heat conducting foils (5, 6) are pressed into the tube guiding channel (4) along the portion and at least partially line it.

2. The area temperature control system (1) according to claim 1, wherein the heat conducting foils (5, 6) overlap in such a way that, after the heat conducting foils (5, 6) have been pressed into the tube guiding channel (4), an area (13) of the tube guiding channel (4) remains free of heat conducting foils (5, 6).

3. The area temperature control system (1) according to claim 2, wherein the tube guiding channel (4) has a circumference (12) and the area (13) is arranged around a center of the circumference (12).

4. The area temperature control system (1) according to any of the preceding claims, wherein each heat conducting foil (5, 6) has an overlapping portion (8) bounded by an edge (10) of the heat conducting foil (5, 6), with both overlapping portions (8) being pressed into the tube guiding channel (4) when the tube (11) is inserted.

5. The area temperature control system (1) according to claim 4, wherein the overlapping portions (8) overlap in a predetermined manner such that each overlapping portion (8) lines at least one third of the circumference (12) of the tube guiding channel (4).

6. The area temperature control system (1) according to any of the preceding claims, wherein the tube guiding channel (4) is formed as a semi-cylindrical recess in the installation plate (2).

7. The area temperature control system (1) according to any of the preceding claims, wherein the tube guiding channel (4) extends in a straight line.

8. The area temperature control system (1) according to any of the preceding claims, wherein the heat conducting foils (5, 6) are formed as strips.

9. The area temperature control system (1) according to any of the preceding claims, wherein the installation plate (2) is formed as an insulating material panel and the heat conducting foils (5, 6) are made of an aluminum material or a graphite material.

10. A method for producing an area temperature control system (1) according to any of the claims 1 to 9, comprising the steps of:
- providing an installation plate (2);
- incorporating at least one tube guiding channel (4), open to an upper side (3) of the installation plate (2); and
- applying two heat conducting foils (5, 6) to the upper side (3) of the installation plate (2) in such a way that said heat conducting foils (5, 6) overlap along the tube guiding channel (4) at least in one portion.

11. An assembly method for producing a heat exchanger assembly (2), comprising the steps of:
- providing an area temperature control system (1) according to any of the claims 1 to 9;
- inserting a tube (11) into the tube guiding channel (4) in such a way that the heat conducting foils (5, 6) are at least partially pressed into the tube guiding channel (4) and at least partially line it.

## Revendications

1. Système destiné à tempérer des surfaces (1) pour refroidir ou chauffer des plafonds, murs ou sols d'un bâtiment, présentant
- une plaque de pose (2) dans laquelle au moins un conduit de guidage de tube (4) ouvert vers un côté supérieur (3) de la plaque de pose (2) est inséré ; et
- deux films de conduction thermique (5, 6), **caractérisés en ce que** les deux films de conduction thermique (5, 6) sont apposés sur le côté supérieur (3) de la plaque de pose (2) de telle manière que les deux films de conduction thermique (5, 6) se chevauchent au moins le long d'une section du conduit de guidage de tube (4) de sorte que, lors de l'insertion ultérieure d'un tube (11) dans le conduit de guidage de tube (4), les films de conduction thermique (5, 6) soient enfoncés dans le conduit de guidage de tube (4) le long de la section et garnissent au moins en partie celui-ci.

2. Système destiné à tempérer des surfaces (1) selon la revendication 1, sachant que les films de conduction thermique (5, 6) se chevauchent de telle manière qu'après l'enfoncement des films de conduction thermique (5, 6) dans le conduit de guidage de tube (4), une zone (13) du conduit de guidage de tube (4) reste exempte de films de conduction thermique (5, 6).

3. Système destiné à tempérer des surfaces (1) selon la revendication 2, sachant que le conduit de guidage de tube (4) présente un pourtour (12) et la zone (13) est disposée autour d'un milieu du pourtour (12).

4. Système destiné à tempérer des surfaces (1) selon l'une des revendications précédentes, sachant que chaque film de conduction thermique (5, 6) présente une section de chevauchement (8) qui est délimitée par un bord (10) du film de conduction thermique (5, 6), sachant que les deux sections de chevauchement (8) sont enfoncées dans le conduit de guidage de tube (4) lors de l'insertion du tube (11).

5. Système destiné à tempérer des surfaces (1) selon la revendication 4, sachant que les sections de chevauchement (8) se chevauchent de telle manière prédéterminée que chaque section de chevauchement (8) garnisse au moins un tiers du pourtour (12) du conduit de guidage de tube (4).

6. Système destiné à tempérer des surfaces (1) selon l'une des revendications précédentes, sachant que le conduit de guidage de tube (4) est constitué comme évidement en forme de demi-cylindre dans la plaque de pose (2).

7. Système destiné à tempérer des surfaces (1) selon l'une des revendications précédentes, sachant que le conduit de guidage de tube (4) présente un tracé rectiligne.

8. Système destiné à tempérer des surfaces (1) selon l'une des revendications précédentes, sachant que les films de conduction thermique (5, 6) sont constitués comme bandes.

9. Système destiné à tempérer des surfaces (1) selon l'une des revendications précédentes, sachant que la plaque de pose (2) est constituée comme plaque isolante et les films de conduction thermique (5, 6) sont fabriqués à partir d'un matériau d'aluminium ou d'un matériau de graphite.

10. Procédé de fabrication d'un système destiné à tempérer des surfaces (1) selon l'une des revendications 1 à 9, comprenant les étapes de :
- mise à disposition d'une plaque de pose (2) ;
- formation d'au moins un conduit de guidage de tube (4) ouvert vers un côté supérieur (3) de la plaque de pose (2) ; et
- apposition de deux films de conduction thermique (5, 6) sur le côté supérieur (3) de la plaque de pose (2) de telle manière que ces films de conduction thermique (5, 6) se chevauchent au moins dans une section le long du conduit de guidage de tube (4).

11. Procédé de montage pour la fabrication d'un dispositif d'échangeur de chaleur (2), comprenant les étapes de :
- mise à disposition d'un système destiné à tempérer des surfaces (1) selon l'une des revendications 1 à 9 ;
- insertion d'un tube (11) dans le conduit de guidage de tube (4) de telle manière que les films de conduction thermique (5, 6) soient enfoncés au moins en partie dans le conduit de guidage de tube (4) et garnissent au moins en partie celui-ci.
